# EUROPÄISCHE PATENTSCHRIFT

(11) **EP 3 331 719 B1**
(45) Veröffentlichungstag und Bekanntmachung des Hinweises auf die Patenterteilung: **22.05.2019**
(21) Anmeldenummer: 16734558.6
(22) Anmeldetag: 29.06.2016
(51) Int. Cl.: B60K 20/02, F16H 59/12, F16H 59/02

(54) **SHIFT-BY-WIRE-SCHALTELEMENT INTEGRIERT IN EINE KRAFTFAHRZEUG-HANDAUFLAGE**
SHIFT-BY-WIRE SHIFT ELEMENT INTEGRATED INTO A MOTOR VEHICLE HAND REST
ÉLÉMENT DE COMMUTATION POUR CHANGEMENT DE VITESSES À COMMANDE ÉLECTRIQUE INTÉGRÉ DANS UN APPUI-MAIN DE VÉHICULE AUTOMOBILE

(30) Priorität: 06.08.2015 DE 102015010026
(43) Veröffentlichungstag der Anmeldung: 13.06.2018
(73) Patentinhaber: Audi AG, 85045 Ingolstadt (DE)
(72) Erfinder: HÉLOT, Jacques, 85051 Ingolstadt (DE); OLLEFERS, Edwin, 85055 Ingolstadt (DE); MACOUN, Vladimir, 85051 Ingolstadt (DE); BEIERLEIN, Ulrich, 85051 Ingolstadt (DE)
(86) Internationale Anmeldenummer: PCT/EP2016/001104
(87) Internationale Veröffentlichungsnummer: WO 2017/020979

(56) Entgegenhaltungen:
- WO-A1-2011/137267
- DE-A1-102009 008 731
- DE-B4-102010 013 169
- DE-U1-202005 020 727

## Beschreibung

Die Erfindung betrifft eine Handauflagevorrichtung für ein Kraftfahrzeug. Neben einer Auflagefläche für eine Nutzerhand weist die Handauflagevorrichtung ein Schaltelement auf, mittels welchem eine Shift-by-Wire-Gangwahlsteuerung bedient werden kann. Zu der Erfindung gehört auch ein Kraftfahrzeug mit der erfindungsgemäßen Handauflagevorrichtung.

Eine Handauflagevorrichtung der beschriebenen Art ist beispielsweise aus der DE 10 2010 013 169 B4 bekannt. Danach bildet das Auflageelement mit der Auflagefläche für die Nutzerhand zugleich ein Fahrstufenwählelement, indem das gesamte Auflageelement im Kraftfahrzeug in Längsrichtung verschiebbar ist. Um die Verschiebebewegung mit der eigentlichen Shift-by-Wire-Gangwahlsteuerung zu koppeln, ist ein Schaltelement in einem Fuß des Auflageelements integriert, das gedrückt werden muss, um die Funktion des Fahrstufenwählelements zu aktivieren beziehungsweise desaktivieren.

Nachteilig bei dem Fahrstufenwählelement aus dem Stand der Technik ist, dass das Auflageelement nicht vom Beifahrer genutzt werden kann, sondern stets für den Fahrer freigehalten werden muss, damit dieser bei Bedarf das gesamte Auflageelement verschieben kann. Weiteres Problem ist, dass beim Aufstützen auf das Auflageelement versehentlich ein Wechsel der Fahrstufe ausgelöst werden kann, falls der Fahrer beim Aufstützen auch eine Kraft in Längsrichtung auf die Auflagefläche ausübt.

Der Erfindung liegt die Aufgabe zugrunde, in einem Kraftfahrzeug eine universell nutzbare Auflagefläche für eine Nutzerhand zur Bedienung z.B. eines Touch-Displays bereitzustellen, ohne dass hierdurch versehentliche und/oder ungewollte Bedienvorgänge an der Shift-by-Wire-Gangwahlsteuerung verursacht werden können.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist eine Handauflagevorrichtung für ein Kraftfahrzeug bereitgestellt. In der folgenden Beschreibung der Handauflagevorrichtung sind zur besseren Orientierung drei Richtungen angegeben, nämlich eine Längsrichtung, eine Querrichtung und eine Hochrichtung. Diese Richtungen stimmen mit den gleichnamigen Richtungen im Kraftfahrzeug überein, falls die Handauflagevorrichtung in einer bestimmungsgemäßen Einbaulage im Kraftfahrzeug eingebaut ist. Die drei genannten Richtungen stehen senkrecht aufeinander und bilden ein Koordinatensystem, wobei die Längsrichtung vom Fahrzeugheck zur Fahrzeugfront, die Querrichtung beispielsweise von der linken Fahrzeugseite zur rechten Fahrzeugseite und die Hochrichtung vom Fahrzeugboden zum Fahrzeugdach weist.

Die Handauflagevorrichtung weist ein Auflageelement auf, das sich entlang der Querrichtung von einer Beifahrerseite der Handauflagevorrichtung zu einer gegenüberliegenden Fahrerseite der Handauflagevorrichtung erstreckt. Die Beifahrerseite ist dabei insbesondere die zum Beifahrersitz gewandte Seite der Handauflagevorrichtung in der genannten bestimmungsgemäßen Einbaulage. Entsprechend ist die Fahrerseite die dem Fahrersitz zugewandte Seite. Das Auflageelement weist eine in die Hochrichtung weisende Auflagefläche für eine Nutzerhand auf. Mit anderen Worten ist ein Normalenvektor der Auflagefläche derart ausgerichtet, dass er vollständig in die Hochrichtung weist oder zumindest die Hochrichtung im beschriebenen Koordinatensystem die größte Vektorkomponente bildet.

In das Auflageelement ist ein Schaltelement zum Bedienen einer Shift-by-Wire-Gangwahlsteuerung integriert. Das Schaltelement ist an einem fahrerseitigen Ende des Auflageelements und zwischen der Auflagefläche und einer gegenüberliegenden Unterseite des Auflageelements angeordnet. Im Zusammenhang mit der Erfindung ist unter einer Shift-by-Wire-Gangwahlsteuerung insbesondere eine elektromechanische Schalteinrichtung für ein Automatikgetriebe zu verstehen, wobei Gangwahlmodi des Automatikgetriebes (insbesondere P - Parken, N - Neutral, R - Rückwärtsgang, D - Vorwärts-Gangwahlautomatik / Drive, S - Sport, Recup - Rekuperation) durch ein entsprechendes elektrisches oder digitales Schaltsignal eingestellt werden. Zum Auswählen aus diesen Gangwahlmodi ist das beschriebene Schaltelement vorgesehen.

Das Schaltelement ist bei der erfindungsgemäßen Handauflagevorrichtung dabei entlang der Querrichtung zwischen einer Verstaustellung, in welcher es größtenteils oder ganz in dem Auflageelement versenkt ist, und einer Schaltstellung, in welcher es weiter aus dem Auflageelement herausragt als in der Verstaustellung, bewegbar ausgestaltet ist. In der Verstaustellung ist das Schaltelement bezüglich der Längsrichtung unbewegbar oder fest angeordnet. Dagegen ist das Schaltelement in der Schaltstellung bezüglich der Längsrichtung unidirektional oder bidirektional bewegbar gelagert. Ist mit anderen Worten das Schaltelement in der Verstaustellung in dem Auflageelement größtenteils oder ganz versenkt und lässt sich auch nicht entlang der Längsrichtung bewegen. Ragt das Schaltelement dagegen in der Schaltstellung weiter aus dem Auflageelement heraus als in der Verstaustellung, so lässt sich das Schaltelement auch entlang der Längsrichtung bewegen.

Durch die Erfindung ergibt sich der Vorteil, dass ein Benutzer mit seiner Hand die Auflagefläche benutzen kann, ohne dass ein Risiko besteht, mit der Hand auf der Auflagefläche auch die Shift-by-Wire-Gangwahlsteuerung zu schalten. Mit anderen Worten ergibt sich keine Beeinträchtigung der Benutzung der Handauflage durch das Bereitstellen des Schaltelements in der Handauflagevorrichtung.

Zu der Erfindung gehören auch optionale Weiterbildungen, durch deren Merkmale sich zusätzliche Vorteile ergeben.

Um das Schaltelement zwischen der Verstaustellung und der Schaltstellung umzuschalten oder zu bewegen, sieht eine Weiterbildung vor, dass das Schaltelement eine Push-Push-Verriegelung aufweist. Eine solche Push-Push-Verriegelung wird auch Kugelschreiberverriegelung genannt. Sie ist dazu ausgelegt, bei Hineindrücken des Schaltelements in das Auflageelement das Auflageelement aus der Verstaustellung in die Schaltstellung freizugeben und nach nochmaligem Hineindrücken des Schaltelements in das Auflageelement das Schaltelement wieder in der Verstaustellung zu halten. Hierdurch ergibt sich der Vorteil, dass sich das Schaltelement auch in der Verstaustellung, in welcher es schwer zu greifen ist, weil es in dem Auflageelement versenkt ist, dennoch mühelos in die Schaltstellung bringen lässt. Alternativ zu einer Push-Push-Verriegelung kann auch beispielsweise ein Motor vorgesehen sein, mittels welchem das Schaltelement in Abhängigkeit von einem Wechselsignal zwischen der Verstaustellung und der Schaltstellung gewechselt wird.

Eine Weiterbildung berücksichtigt, dass das Handhaben des Schaltelements einem Benutzer einfacher fällt, wenn er das Schaltelement umgreifen kann. Hierzu ist vorgesehen, dass das Schaltelement einen Fingerauflagebereich aufweist, der zumindest in der Schaltstellung aus dem Auflageelement in Längsrichtung herausragt. Der Nutzer kann hierdurch das fahrerseitige Ende des Auflageelements umgreifen und beispielsweise den Zeigefinger, Mittelfinger Ringfinger auf den Fingerauflagebereich auflegen. Mit dem Daumen kann er zusätzlich den in Querrichtung herausragenden Teil des Schaltelements greifen. Somit befindet sich das Schaltelement dann zwischen dem Daumen einerseits und den übrigen Fingern des Nutzers andererseits. Das Fingerauflageelement ragt in Längsrichtung insbesondere zu einer Vorderseite der Handauflagevorrichtung hin heraus, also zur Fahrzeugfront, wenn die Handauflagevorrichtung bestimmungsgemäß in dem Kraftfahrzeug eingebaut ist.

Eine Weiterbildung berücksichtigt, dass unabhängig vom eingestellten Gangwahlmodus der Shift-by-Wire-Gangwahlsteuerung das Schaltelement stets dieselbe Position aufweisen sollte, damit es für den Nutzer blindbedienbar bleibt. Hierzu ist vorgesehen, dass das Schaltelement in der Schaltstellung bezüglich der Längsrichtung monostabil gelagert ist. Mit anderen Worten weist das Schaltelement in der Schaltstellung stets dieselbe Ruhelage auf, wenn es nicht bedient wird, das heißt vom Benutzer unberührt ist.

Gemäß einer Weiterbildung weist die Handlauflagevorrichtung auch die für das Ansteuern der Shift-by-Wire-Gangwahlsteuerung nötige Elektronik auf. Hierzu ist eine Steuereinrichtung für die Shift-by-Wire-Gangwahlsteuerung dazu ausgelegt, mit in der Schaltstellung befindlichem Schaltelement bei Auslenken des Schaltelements entlang der Längsrichtung, also beispielsweise nach vorne, ein R-Schaltsignal zum Einstellen eines Rückwärtsgangs und bei entlang der Längsrichtung entgegengesetztem Auslenken des Schaltelements, also beispielsweise nach hinten, ein D-Schaltsignal zum Einstellen einer Vorwärts-Gangwahlautomatik (Gangwahlmodus D) zu erzeugen. Das Auslenken kann hierbei aus eine mehrfache Wiederholung einer Auslenkbewegung umfassen. Wenn das Schaltelement von der Verstaustellung in die Schaltstellung gebracht wird, ist dabei insbesondere zunächst die Erzeugung eines N-Schaltsignals vorgesehen, welches einen Neutralmodus oder Neutralgang oder Leerlauf einstellt. Ausgehend von dieser Einstellung kann dann das R-Schaltsignal durch die beschriebene Betätigung erzeugt werden. Wird dann in die entgegengesetzte Richtung ausgelenkt, so kann zunächst wieder das N-Schaltsignal erzeugt werden. Bei nochmaligem Auslenken in dieselbe Richtung, also entgegengesetzt zur Richtung für das R-Schaltsignal, kann dann das D-Schaltsignal erzeugt werden. Es kann auch vorgesehen sein, dass durch nochmaliges Auslenken in diese Richtung Rekuperationsstufen eingestellt werden, durch welche ein Bremsmoment eines elektrischen Generators vorgegeben wird, mit welchem der Generator eine Rollbewegung des Kraftfahrzeugs abbremst, beispielsweise auf einer Fahrt hangabwärts oder bergabwärts. Alternativ kann (im Gangwahlmodus D) bei nochmaligem Auslenken ein S-Schaltsignal für einen Gangwahlmodus S (Sport) erzeugt werden. Die Steuereinrichtung für die Shift-by-Wire-Gangwahlsteuerung kann beispielsweise auf der Grundlage eines Mikrocontrollers oder Mikroprozessors realisiert sein.

Gemäß einer Weiterbildung ist das fahrerseitige Ende des Auflageelements frei in der Luft angeordnet. Mit anderen Worten ist das fahrerseitige Ende des Auflageelements nur durch das Auflageelement selbst gehalten. Es gibt also nur eine einzige Befestigung des Auflageelements am gegenüberliegenden, beifahrerseitigen Ende, über welche das Auflageelement im in der Handauflagevorrichtung gehalten ist. Hierdurch ist das fahrerseitige Ende des Auflageelements vom Nutzer, insbesondere vom Fahrer, umgreifbar ausgestaltet. Dies weist den Vorteil auf, dass der Nutzer das Schaltelement besser greifen kann. Ein weiterer Vorteil besteht darin, dass der Fahrer unter das Auflageelement blicken kann, weil sein Blick nicht durch eine fahrerseitige Halteeinrichtung für das Auflageelement blockiert ist. Somit kann unter dem Schaltelement in vorteilhafter Weise ein Bildschirm oder Display angeordnet sein.

Eine Weiterbildung stellt einen Bildschirm bereit, mit dem flexibel und/oder variabel unterschiedliche Informationen angezeigt werden können, wobei bei Bedarf auch der aktuell eingeschaltete Gangwahlmodus der Shift-by-Wire-Gangwahlsteuerung angezeigt werden kann. Hierzu ist vorgesehen, dass sich das Auflageelement über einen Bodenbereich erstreckt, welchem die Unterseite des Auflageelements zugewandt ist. Das Auflageelement, kann also beispielsweise als Bogen oder Barren oder Balken ausgestaltet sein und über dem Bodenbereich in einem Abstand größer 0 angeordnet sein. In dem Bodenbereich ist der Bildschirm bereitgestellt, der eine Anzeigefläche zum Anzeigen einer pixelbasierten Anzeigegrafik aufweist. Der Bildschirm kann beispielsweise ein TFT-Bildschirm (TFT- thin film transistor, Dünnschichttransistor) oder ein LCD-Bildschirm (LCD - liquid cristal display - Flüssigkristallanzeige) oder ein OLED-Bildschirm (OLED - organic light emitting diode, organische Leuchtdiode) sein. Unter einer pixelbasierten Anzeigegrafik ist die aus dem Stand der Technik bekannte bildpunktweise Darstellung von grafischen Inhalten gemeint, die durch Vorgeben digitaler Bilddaten eingestellt oder verändert werden kann. Vorteil dieser Ausführungsform ist, dass aus Sicht des Fahrers unterhalb des Auflageelements eine pixelbasierte Anzeigegrafik dargestellt werden kann, über welche dem Fahrer Informationen angezeigt werden können. Vorzugsweise handelt es sich bei dem Bildschirm um einen Berührbildschirm (Touchscreen), sodass der Benutzer mit der Hand vom Auflageelement aus auch eine Bedienung des Kraftfahrzeugs über den Berührbildschirm vornehmen kann. Dabei kann sogar vorgesehen sein, dass ein Abstand des Berührbildschirms vom Auflageelement kleiner als 15 Zentimeter ist, sodass der Benutzer die Hand oder das Handgelenk auf der Auflagefläche ruhen lassen kann und mit den Fingern dennoch den Berührbildschirm berühren kann. Vorzugsweise beträgt eine Abmessung der Auflagefläche entlang der Querrichtung mindestens 80 Prozent, insbesondere mindestens 90 Prozent, der Abmessung der Anzeigefläche entlang dieser Richtung. Hierdurch kann der Benutzer dann seine Hand auch bei Bedienung an Randbereichen der Anzeigefläche immer noch auf der Ablagefläche ruhen lassen.

Eine Weiterbildung sieht das beschriebene Anzeigen des Gangwahlmodus mittels des Bildschirms vor. Hierzu ist eine Steuereinrichtung für den Bildschirm vorgesehen und dazu ausgelegt, auf der Anzeigefläche eine Schaltanzeige betreffend einen bei der Shift-by-Wire-Gangwahlsteuerung eingestellten Gangwahlmodus (zum Beispiel "P", "N", "D", "R", "S") anzuzeigen. Hierdurch ergibt sich der Vorteil, dass der Benutzer bei einem Blick auf das Schaltelement darunter auf der Anzeigefläche den aktuell eingestellten Gangwahlmodus sieht. Die Steuereinrichtung kann hierzu beispielsweise auf der Grundlage eines Mikrocontrollers oder eines Mikroprozessors realisiert sein.

Wie bereits ausgeführt, gehört zu der Erfindung auch ein Kraftfahrzeug. Das erfindungsgemäße Kraftfahrzeug weist die beschriebene Shift-by-Wire-Gangwahlsteuerung, das heißt das Shift-by-Wire-System auf, wie es an sich aus dem Stand der Technik bekannt ist. Als Bedienschnittstelle ist eine Ausführungsform der erfindungsgemäßen Handauflagevorrichtung bereitgestellt, wobei die Handauflagevorrichtung in einer Mittelkonsole zwischen einem Fahrersitz und einem Beifahrersitz angeordnet sein kann. Hierdurch ergibt sich der Vorteil, dass die Ablagefläche als Handauflage für die Bedienung eines Berührbildschirms (Touchscreens) sowohl vom Fahrer als auch vom Beifahrer, also beidseitig, erreichbar ist und hierbei dennoch kein Risiko besteht, dass der Fahrer am Schalten oder Bedienen der Shift-by-Wire-Gangwahlsteuerung gehindert wird.

Besonders bevorzugt ist vorgesehen, dass das Handauflageelement bezüglich der Mittelkonsole unbeweglich angeordnet ist. Hierdurch ist seine Stellung im Kraftfahrzeug unabhängig von dem eingestellten Gangwahlmodus.

Gemäß einer Weiterbildung ist vorgesehen, dass das Schaltelement in der Schaltstellung für die Bewegung entlang der Längsrichtung nur freigegeben ist, nachdem oder während eine zusätzliche mechanische Taste oder ein Bedienfeld einer berührungssensitiven Oberfläche betätigt ist. Hierdurch ist ein versehentliches Auslösen eines Wechsels des Gangwahlmodus verhindert. Die berührungssensitive Oberfläche kann durch ein Touchscreen oder ein Touchpad (berührungssensitives Sensorfeld) bereitgestellt sein. Die möglichen Bewegungsrichtungen können durch Symbole, insbesondere Leuchtsymbole angezeigt sein. Hierzu können Leuchtmittel in das Schaltelement integriert sein.

Gemäß einer Weiterbildung ist vorgesehen, dass in das Schaltelement eine Start-Stopp-Funktion zum Starten und Stoppen eines Motors des Kraftfahrzeugs integriert ist, indem die Handauflagevorrichtung dazu ausgelegt ist, den Motor in der Verstaustellung des Schaltelements in einem ausgeschalteten Zustand zu halten und in der Schaltstellung des Schaltelements den Motor zu betreiben. Dann ist kein zusätzliches Start-Stopp-Schaltelement, z.B. die im Stand der Technik übliche Start-Stopp-Taste, nötig.

Das erfindungsgemäße Kraftfahrzeug ist bevorzugt als Kraftwagen, insbesondere als Personenkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs mit einer Handauflagevorrichtung;
- Fig. 2: eine schematische Darstellung der Handauflagevorrichtung, während ein Schaltelement in einer Verstaustellung ist,
- Fig. 3: eine schematische Darstellung der Handauflagevorrichtung während eines Wechsels des Schaltelements von der Verstaustellung in eine Schaltstellung,
- Fig. 4: eine schematische Darstellung der Handauflagevorrichtung während eines Schaltvorgangs zum Erzeugen eines D-Schaltsignals,
- Fig. 5: eine schematische Darstellung der Handauflagevorrichtung während eines Schaltvorgangs zum Erzeugen eines R-Schaltsignals,
- Fig. 6: eine schematische Darstellung der Handauflagevorrichtung während eines Schaltvorgangs zum Einstellen einer Rekuperationsstufe,
- Fig. 7: eine schematische Darstellung der Handauflagevorrichtung mit einer alternativen Funktionsbelegung in der Verstaustellung und
- Fig. 8: eine schematische Darstellung der Handauflagevorrichtung von Fig. 7 nach einem Wechsel in die Schaltstellung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

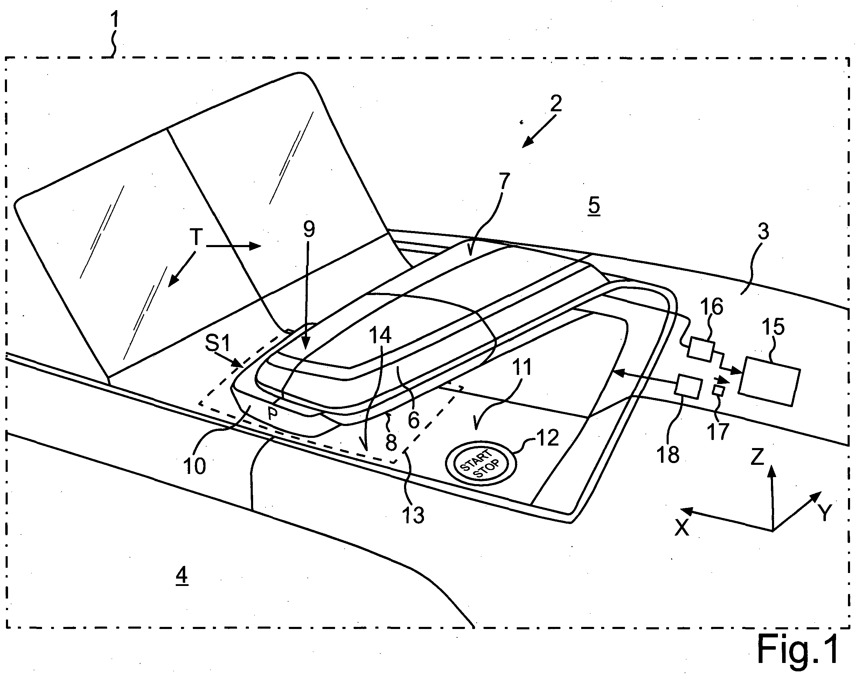

Fig. 1 zeigt ein Kraftfahrzeug 1, bei dem es sich beispielsweise um einen Kraftwagen, insbesondere einen Personenkraftwagen, handeln kann. Das Kraftfahrzeug 1 weist eine Handauflagevorrichtung 2 auf, die beispielsweise in einer Mittelkonsole 3 angeordnet sein kann. Zur besseren Orientierung ist ein Koordinatensystem des Kraftfahrzeugs 1 mit einer entlang einer Längsrichtung des Kraftfahrzeugs 1 ausgerichteten X-Achse, einer entlang einer Querrichtung des Kraftfahrzeugs 1 ausgerichteten Y-Achse und einer entlang einer Hochachse des Kraftfahrzeugs 1 ausgerichteten Z-Achse. Die Mittelkonsole 3 kann sich zwischen einem Fahrersitz 4 und einem Beifahrersitz 5 befinden, die in Fig. 1 nur durch ihre Bezugszeichen repräsentiert sind. Der Fahrersitz 4 repräsentiert eine Fahrerseite der Auflagevorrichtung. 2. Der Beifahrersitz 5 repräsentiert eine Beifahrerseite der Auflagevorrichtung 2.

Die Handauflagevorrichtung 2 weist ein Auflageelement 6 auf, das beispielsweise als Balken oder Barren oder Bogen ausgestaltet sein kann. In seiner Längserstreckung ist das Auflageelement 6 entlang der Y-Richtung ausgerichtet. Das Auflageelement 6 kann beispielsweise auf der Grundlage eines Körpers aus Kunststoff oder Metall gebildet sein. Zusätzlich kann der Körper mit Leder und/oder Schaum bezogen sein, was den Komfort und/oder die Griffigkeit steigert. Durch das Auflageelement 6 ist eine Auflagefläche 7 für eine Hand und/oder ein Handgelenk eines Fahrers und/oder Beifahrers bereitgestellt. Die Auflagefläche 7 weist nach oben in die Z-Richtung. Der Auflagefläche 7 gegenüber weist das Auflageelement 6 eine Unterseite 8 auf. An einem fahrerseitigen Ende 9 des Auflageelements 6 ist in das Auflageelement 6 zwischen der Auflagefläche 7 und der Unterseite 8 ein Schaltelement 10 angeordnet. In Fig. 1 ist das Schaltelement 10 in einer Verstaustellung S1 dargestellt, in welcher es größtenteils in dem Auflageelement 6 angeordnet oder versenkt ist. Das Schaltelement 10 kann beispielsweise ein Spritzgussteil als Handhabe oder Bedienteil umfassen.

Das Auflageelement 6 ist über einem Bodenbereich 11 angeordnet, der beispielsweise als Vertiefung oder Kuhle oder Fach oder Display (Bildschirm) in der Mittelkonsole 3 ausgestaltet sein kann. In dem Bodenbereich 11 kann beispielsweise ein Start-Stopp-Schaltelement 12 zum Starten und Stoppen eines Verbrennungsmotors oder Elektromotors des Kraftfahrzeugs 1 vorgesehen sein. In dem Bodenbereich 11 kann das Display oder der Bildschirm 13 angeordnet sein. Durch eine Anzeigefläche 14 des Bildschirms 13 können grafische Elemente oder pixelbasierte Anzeigegrafiken angezeigt werden.

Mittels des Schaltelements 10 kann ein Shift-by-Wire-System oder eine Shift-by-Wire-Gangwahlsteuerung 15 bedient werden. Hierzu kann die Handauflagevorrichtung 2 eine Steuereinrichtung 16 für die Shift-by-Wire-Gangwahlsteuerung 15 aufweisen, mittels welcher in Abhängigkeit von einer Betätigung des Schaltelements 10 Schaltsignale 17 für die Gangwahlsteuerung 15 erzeugt werden können. Die Schaltsignale 17 können beispielsweise ein P-Schaltsignal, ein R-Schaltsignal, ein D-Schaltsignal, ein N-Schaltsignal, ein S-Signal und/oder ein Wahlsignal für eine Rekuperationsstufe (Recup) umfassen, wobei die Schaltsignale 17 den jeweils gleichnamigen Gangwahlmodus P, R, D, N bzw. S auswählen können. Beispielsweise kann eine Schaltreihenfolge R - N - D - S - Recup 1 bis 4 vorgesehen sein.

Zum Steuern des Bildschirms 13, das heißt zum Einstellen seiner Anzeigeinhalte, kann die Handauflagevorrichtung 2 eine Steuereinrichtung 18 für den Bildschirm 13 aufweisen. Die Steuereinrichtungen 16, 18 können beispielsweise auf der Grundlage eines Mikrocontrollers oder Mikroprozessors realisiert sein.

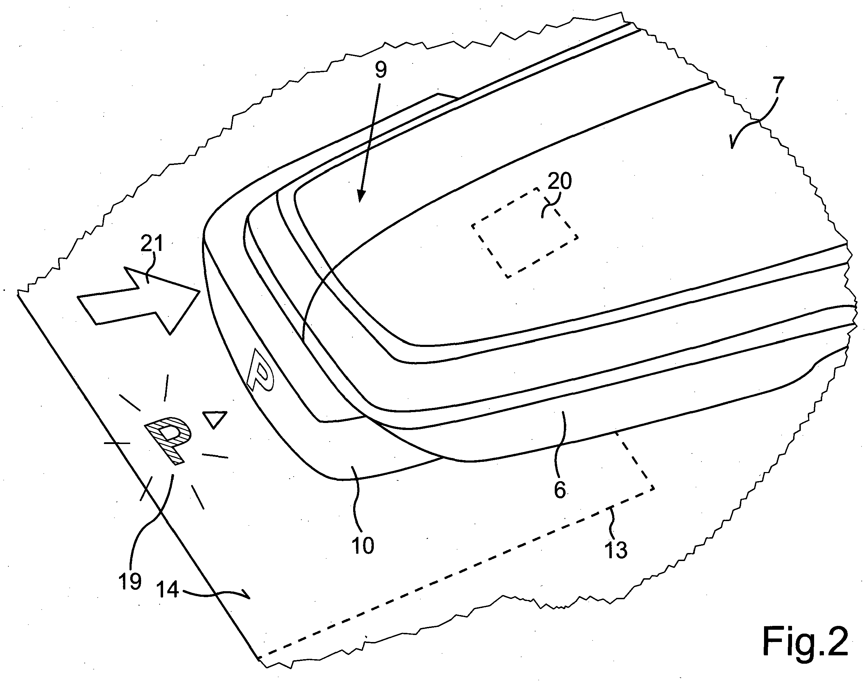

Im Folgenden ist anhand von Fig. 2 bis Fig. 6 ein Bedienvorgang der Gangwahlvorrichtung 15 mittels des Schaltelements 10 veranschaulicht.

Fig. 2 zeigt, wie die Verstaustellung S1 durch eine Anzeigegrafik 19 auf der Anzeigefläche 14 dem Fahrer visualisiert oder angezeigt werden kann. Fig. 2 zeigt, des Weiteren wie das Schaltelement 10 aus der in Fig. 1 dargestellten Verstaustellung S1 herausbewegt werden kann. Das Schaltelement 10 kann beispielsweise eine Push-Push-Verriegelung 20 aufweisen. Durch Hineindrücken 21 des Schaltelements 10 in das Auflageelement 6 entlang der Y-Richtung kann das Schaltelement beispielsweise entriegelt werden. Mit anderen Worten ist an der Fahrerseite des Auflageelements 6 das Schaltelement 10 derart untergebracht, dass dieses Schaltelement 10 in der Verstaustellung S1 fast komplett unter der Auflagefläche 7 geschoben ist. Dabei kann das Schaltelement 10 nicht entlang der X-Richtung bewegt werden. Vorteil ist, dass sichtbar ist, ob das Kraftfahrzeug in den Gangwahlmodus "P" geschaltet ist oder nicht.

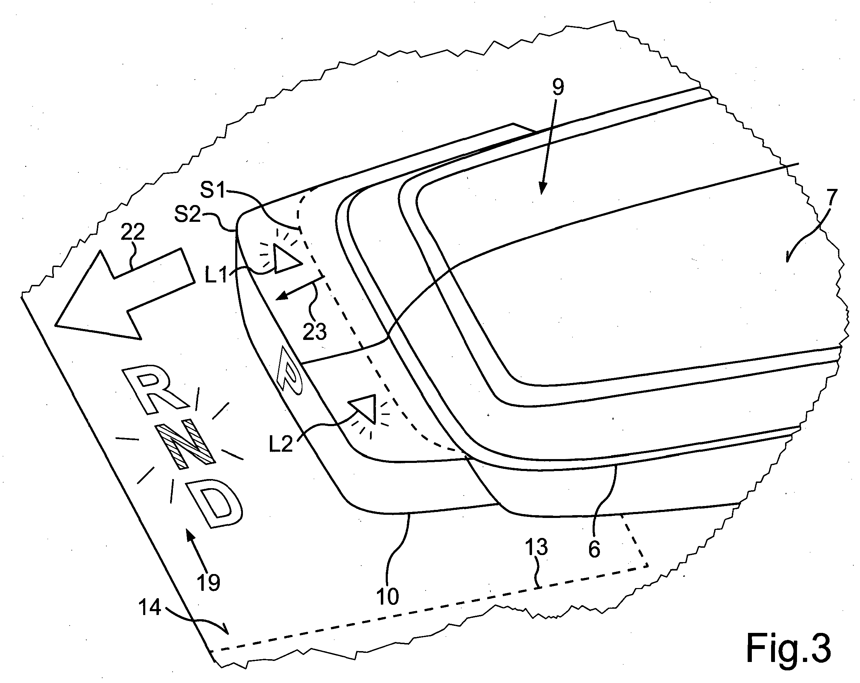

Fig. 3 zeigt, wie dann nach Loslassen des Schaltelements 10 dieses von der Verstaustellung S1 eine Ausrückbewegung oder Ausstellbewegung 22 entlang der Y-Achse in eine Schaltstellung S2 durchführt. Hierdurch ergibt sich ein Versatz 23 des Schaltelements 10 entlang der Y-Richtung aus dem Auflageelement 6. Beim Wechsel von der Verstaustellung S1 in die Schaltstellung S2 erzeugt die Steuereinrichtung 16 ein N-Signal, durch welches die Gangwahlsteuerung 15 in den Neutralgang oder Leerlauf geschaltet wird. Die Steuereinrichtung 18 für den Bildschirm 13 zeigt dem Fahrer entsprechend auf der Anzeigefläche 14 über die Anzeigegrafik 19 den eingestellten Leerlauf ("N") an.

Falls sich das Schaltelement 10 in der Schaltstellung S2 befindet, kann das Schaltelement 10 auch entlang der X-Richtung bewegt werden. Es ist dabei monostabil gelagert. Die Bewegung in X-Richtung ist bidirektional, also sowohl zur Fahrzeugfront hin als auch zum Fahrzeugheck hin möglich. Die möglichen Bewegungsrichtungen können durch Symbole, insbesondere Leuchtsymbole L1, L2, angezeigt werden. Hierzu können Leuchtmittel (nicht dargestellt) in das Schaltelement 10 integriert sein. Die Leuchtmittel können in der Verstaustellung S1 deaktiviert und in der Schaltstellung S2 aktiviert sein.

Um aus der Verstaustellung S1 herauszukommen, drückt man seitlich in der beschriebenen Weise auf das Schaltelement 10. In der sich ergebenden Schaltstellung S2 kann das Schaltelement 10 komfortabel mit dem Daumen nach vorne zur Fahrzeugfront entlang der X-Richtung und mit dem Zeigefinger nach hinten zum Fahrzeugheck entgegen der X-Richtung bewegt werden.

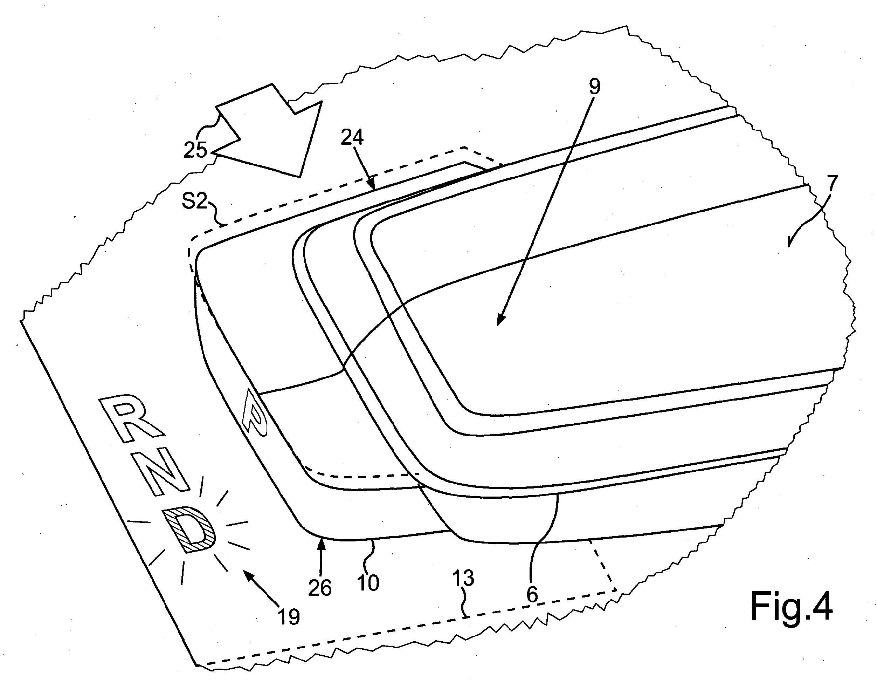

Fig. 4 zeigt, wie in der Schaltstellung S2 nach der Ausstellbewegung 22 aus der Verstaustellung S1 das Schaltelement 10 genutzt werden kann, um ein D-Schaltsignal zum Schalten in den Vorwärts-Gangwahlmodus (D - Drive) der Gangwahlsteuerung zu schalten. Zum Auflegen beispielsweise des Zeigefingers auf das Schaltelement 10 weist dieses einen zusätzlichen Fingerauflagebereich 24 auf, der in X-Richtung aus dem Auflageelement herausragt.

Durch die vom Nutzer durch Drücken der Fingerauflagebereich 24 bewirkte Auslenkbewegung 25 wird das Schaltelement 10 gegen die X-Richtung zum Fahrzeugheck hin ausgelenkt, wodurch die Steuereinrichtung 16 für die Gangwahlsteuerung 15 ein D-Schaltsignal erzeugt. Aufgrund der monostabilen Lagerung wechselt das Schaltelement 10 aus der sich ergebenden Auslenkstellung 26 selbsttätig zurück in die Schaltstellung S2, nachdem der Benutzer wieder die Finger von dem Fingerauflagebereich 24 gelöst hat oder die Fingerkraft entsprechend verringert hat. Die Anzeigegrafik 19 wird durch die Steuereinrichtung 18 für den Bildschirm 13 entsprechend eingestellt.

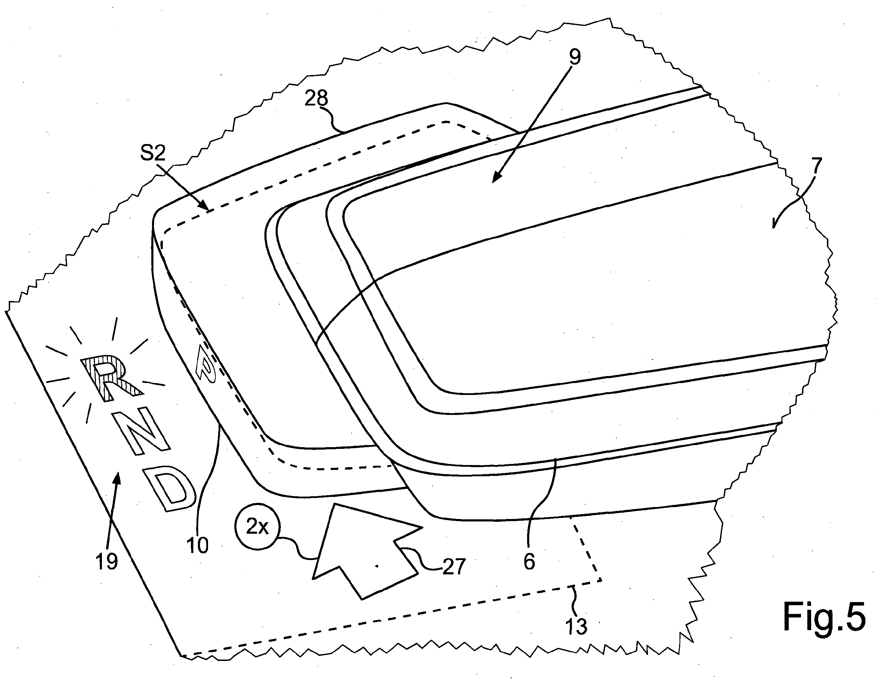

Fig. 5 veranschaulicht, wie ausgehend von dem eingestellten Gangwahlmodus D durch zweimaliges Vorwärtsdrücken 27 des Schaltelements 10 in eine Auslenkstellung 28 der Benutzer die Steuereinrichtung 16 dahingehend bedient, dass diese zunächst ein N-Schaltsignal für einen Gangwahlmodus N und dann ein R-Schaltsignal für einen Gangwahlmodus R zur Gangwahlsteuerung 15 aussendet. Dann befindet sich das Kraftfahrzeug 1 im Rückwärtsgang.

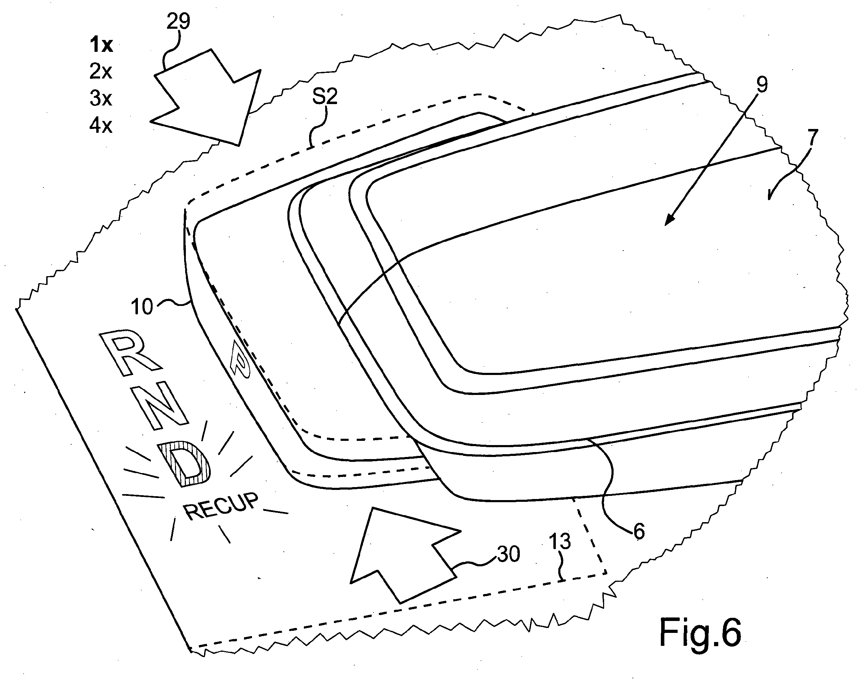

Fig. 6 veranschaulicht, wie alternativ ausgehend von dem in Fig. 4 veranschaulichten Gangwahlmodus D durch sukzessives nach hinten Schalten 29 des Schaltelements 10 der Fahrer unterschiedliche Rekuperationsstufen einstellen kann. Ein einmaliges Zurückschieben 30 des Schaltelements 10 in die Auslenkstellung 28 stellt die Rekuperationsstufe 0 ein, die dem Gangwahlmodus D entspricht.

Das Auflageelement 6 ist statisch in dem Kraftfahrzeug 1, also fest beispielsweise an der Mittelkonsole 3 angeordnet. Es ist durch seine Erstreckung quer entlang der Y-Richtung über den Bildschirm 13 auch für die Bedienung des Bildschirms 13 geeignet. Beispielsweise kann hierzu der Bildschirm 13 einen berührsensitiven Bereich T aufweisen. Die Auflagefläche 7 kann auch komfortabel vom Beifahrer benutzt werden. Unabhängig vom eingelegten Gangwahlmodus oder Fahrstufenwählmodus beeinträchtigt dies nicht die Bedienung des berührsensitiven Bereichs T. Wenn die Hand auf der Auflagefläche 7 aufliegt, während der Benutzer den berührsensitiven Bereich T bedient, gibt es dabei nicht das Risiko, dass das Schaltelement 10 aus Versehen bewegt oder ausgelöst wird.

Das Schaltelement 10 kann durch Bewegen des Daumens und des Zeigefingers bewegt werden. Das Schalten ist durch die Ausgestaltung und die Bewegungsrichtungen des Schaltelements 10 intuitiv. Durch den Versatz 23 zwischen der Verstaustellung S1 und der Schaltstellung S2 ist anhand der räumlichen Position des Schaltelements 10 direkt ersichtlich, ob sich das Kraftfahrzeug im Gangwahlmodus P befindet oder nicht. Somit ist hierfür keine elektrisch betriebene Anzeige nötig, was auch im ausgeschalteten Zustand des Kraftfahrzeugs 1 diese Anzeige ermöglicht.

Bei dem Kraftfahrzeug 1 ist also vor einem Display oder Bildschirm 13 ein Handauflageelement positioniert. Dieses Handauflageelement ist so breit und derart positioniert, dass das komplette Display komfortabel bedient werden kann. Die Handauflage ist dabei unbeweglich.

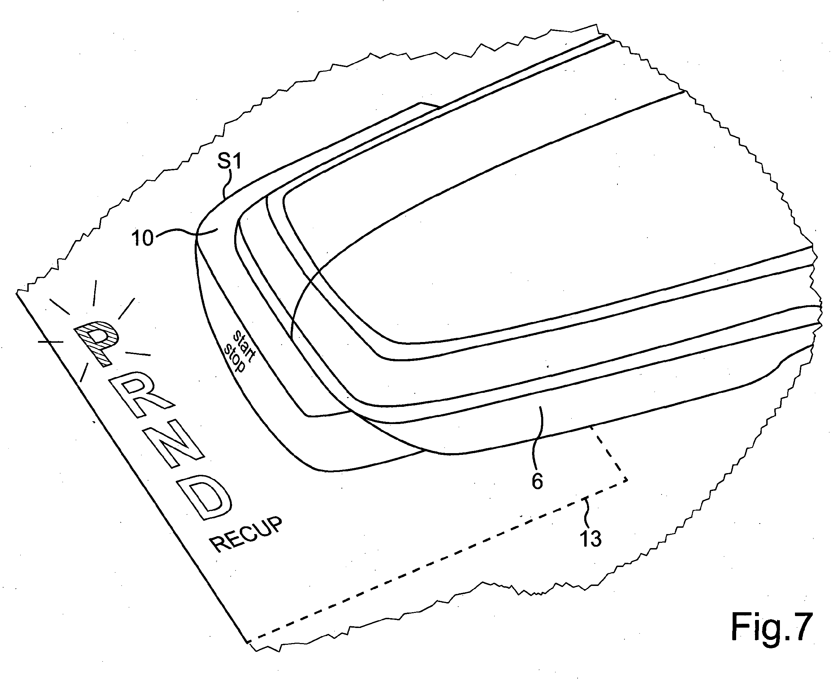

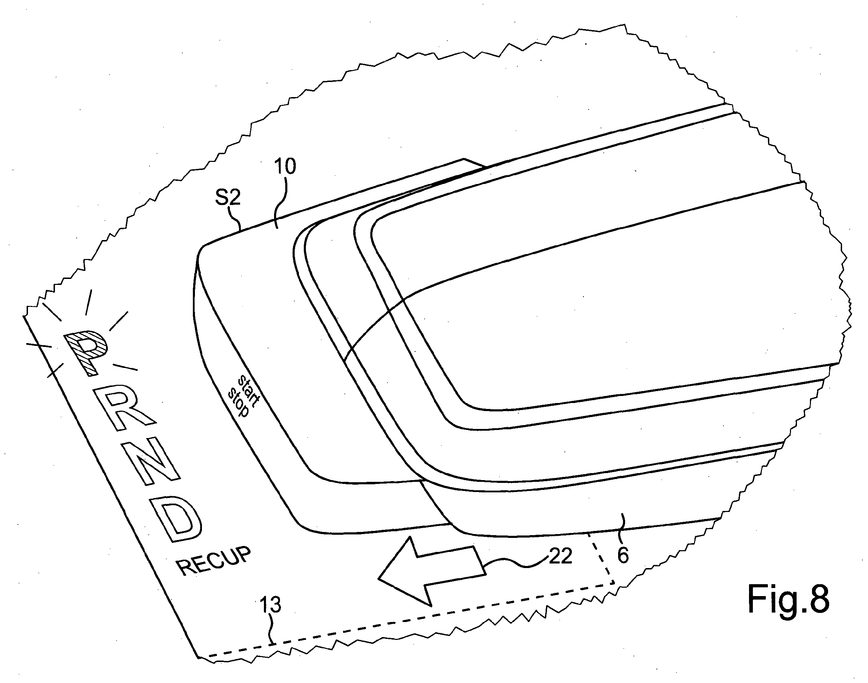

Fig. 7 und Fig. 8 veranschaulichen, wie in das Schaltelement 10 auch die Funktion des Start-Stopp-Schaltelements 12 zum Starten und Stoppen des Motors (Verbrennungsmotor oder Elektromotor) des Kraftfahrzeugs 1 integriert sein kann. In der Verstaustellung S1 gemäß Fig. 7 wird der Motor in einem ausgeschalteten Zustand gehalten. In der Schaltstellung S2 gemäß Fig. 8 wird der Motor betrieben. Hierbei kann vorgesehen sein, dass nach der Ausstellbewegung 22 der Gangwahlmodus P anstelle des im vorangehenden Beispiel beschriebenen Gangwahlmodus N eingestellt ist.

Insgesamt zeigt das Beispiel, wie durch die Erfindung ein Shift-by-Wire-Schaltelement integriert in eine Handauflage für ein Display bereitgestellt werden kann.

## Patentansprüche

1. Handauflagevorrichtung (2) für ein Kraftfahrzeug (1), mit:
- einem sich entlang einer Querrichtung (Y) von einer Beifahrerseite (5) der Handauflagevorrichtung (2) zu einer gegenüberliegenden Fahrerseite (4) der Handauflagevorrichtung (2) erstreckenden Auflageelement (6), das eine in eine Hochrichtung (Z) weisende Auflagefläche (7) für eine Nutzerhand aufweist, und
- einem an einem fahrerseitigen Ende (9) des Auflageelements (6) und zwischen der Auflagefläche (7) und einer gegenüberliegenden Unterseite (8) des Auflageelements (6) angeordneten Schaltelement (10) zum Bedienen einer Shift-by-Wire-Gangwahlsteuerung (15), **dadurch gekennzeichnet dass** das Schaltelement (10) entlang der Querrichtung (Y) zwischen einer Verstaustellung (S1), in welcher es größtenteils oder ganz in dem Auflageelement (6) versenkt ist, und einer Schaltstellung (S2), in welcher es weiter aus dem Auflageelement (6) herausragt als in der Verstaustellung (S1), bewegbar ausgestaltet ist und wobei das Schaltelement (10) bezüglich einer Längsrichtung (X) in der Verstaustellung (S1) unbewegbar und in der Schaltstellung (S2) unidirektional oder bidirektional bewegbar gelagert ist.

2. Handauflagevorrichtung (2) nach Anspruch 1, wobei das Schaltelement (10) eine Push-Push-Verriegelung (20) aufweist, die dazu ausgelegt ist, bei Hineindrücken (21) des Schaltelements (10) in das Auflageelement (6), das Schaltelement (10) aus der Verstaustellung (S1) in die Schaltstellung (S2) freizugeben und nach nochmaligem Hineindrücken das Schaltelement (10) wieder in der Verstaustellung (S1) zu halten.

3. Handauflagevorrichtung (2) nach einem der vorhergehenden Ansprüche, wobei das Schaltelement (10) einen Fingerauflagebereich (24) aufweist, der zumindest in der Schaltstellung (S2) in Längrichtung (X) aus dem Auflageelement (6) herausragt.

4. Handauflagevorrichtung (2) nach einem der vorhergehenden Ansprüche, wobei das Schaltelement (10) in der Schaltstellung (S2) bezüglich der Längsrichtung (X) monostabil gelagert ist.

5. Handauflagevorrichtung (2) nach einem der vorhergehenden Ansprüche, wobei eine Steuereinrichtung (16) für die Shift-by-Wire-Gangwahlsteuerung (15) dazu ausgelegt ist, mit in der Schaltstellung (S2) befindlichem Schaltelement (10) bei Auslenken (27) des Schaltelements (10) entlang der Längsrichtung (X) ein R-Schaltsignal (17) zum Einstellen eines Rückwärtsgangs und bei entlang der Längsrichtung (X) entgegengesetztem Auslenken (25) des Schaltelements (10) ein D-Schaltsignal (17) zum Einstellen einer Vorwärts-Gangwahlautomatik zu erzeugen.

6. Handauflagevorrichtung (2) nach einem der vorhergehenden Ansprüche, wobei das fahrerseitige Ende (9) des Auflageelements (6) nur durch das Auflageelement (6) selbst gehalten ist und hierdurch von dem Nutzer umgreifbar ausgestaltet ist.

7. Handauflagevorrichtung (2) nach einem der vorhergehenden Ansprüche, wobei sich das Auflageelement (6) über einen Bodenbereich (11) erstreckt, welchem die Unterseite (8) des Auflageelements (8) zugewandt ist, wobei in dem Bodenbereich (11) ein Bildschirm (13) bereitgestellt ist, der eine Anzeigefläche (14) zum Anzeigen einer pixelbasierten Anzeigegraphik (19) aufweist.

8. Handauflagevorrichtung (2) nach Anspruch 7, wobei eine Steuereinrichtung (18) für den Bildschirm (13) dazu ausgelegt ist, auf der Anzeigefläche (14) eine Schaltanzeige betreffend einen bei der Shift-by-Wire-Gangwahlsteuerung (15) eingestellten Gangwahlmodus anzuzeigen.

9. Handauflagevorrichtung (2) nach einem der vorhergehenden Ansprüche, wobei in der Schaltstellung (S2) das Schaltelement (10) für die Bewegung entlang der Längsrichtung (X) nur freigegeben ist, nachdem oder während eine zusätzliche mechanische Taste oder ein Bedienfeld einer berührungssensitiven Oberfläche betätigt ist.

10. Handauflagevorrichtung (2) nach einem der vorhergehenden Ansprüche, wobei in das Schaltelement (10) eine Start-Stopp-Funktion zum Starten und Stoppen eines Motors des Kraftfahrzeugs integriert ist, indem die Handauflagevorrichtung (2) dazu ausgelegt ist, den Motor in der Verstaustellung (S1) des Schaltelements (10) in einem ausgeschalteten Zustand zu halten und den Motor in der Schaltstellung (S2) des Schaltelements (10) zu betreiben.

11. Kraftfahrzeug (1) mit einer Shift-by-Wire-Gangwahlsteuerung (15) und mit einer Handauflagevorrichtung (2) nach einem der vorhergehenden Ansprüche, wobei die Handauflagevorrichtung (2) in einer Mittelkonsole (3) zwischen einem Fahrersitz (4) und einem Beifahrersitz (5) angeordnet ist.

12. Kraftfahrzeug (1) nach Anspruch 11, wobei das Auflageelement (6) der Handauflagevorrichtung (2) bezüglich der Mittelkonsole (3) unbeweglich angeordnet ist.

## Claims

1. Hand rest device (2) for a motor vehicle (1), with:
- a resting element (6) extending along a transverse direction (Y) from a front passenger side (5) of the hand rest device (2) to an opposite driver side (4) of the hand rest device (2), which resting element has a resting surface (7), facing in a vertical direction (Z), for a user hand, and
- a shift element (10) disposed on a driver-side end (9) of the resting element (6) and between the resting surface (7) and an oppositely-situated bottom surface (8) of the resting element (6), for operating a shift-by-wire gear selection control (15), **characterised in that**
the shift element (10) along the transverse direction (Y) is designed to be able to move between a stowed position (S1), in which it is for the most part or completely recessed in the resting element (6), and a shift position (S2), in which it protrudes out of the resting element (6) further than in the stowed position (S1), and wherein the shift element (10) with respect to a longitudinal direction (X) is immovably mounted in the stowed position (S1) and is unidirectionally or bidirectionally movably mounted in the shift position (S2).

2. Hand rest device (2) according to claim 1, wherein the shift element (10) has a push-push locking device (20) which is designed at a pressing-in (21) of the shift element (10) into the resting element (6) to release the shift element (10) out of the stowed position (S1) into the shift position (S2) and after a further pressing-in to hold the shift element (10) again in the stowed position (S1).

3. Hand rest device (2) according to any of the preceding claims, wherein the shift element (10) has a finger rest area (24), which at least in the shift position (S2) in longitudinal direction (X) protrudes out of the resting element (6).

4. Hand rest device (2) according to any of the preceding claims, wherein the shift element (10) in the shift position (S2) is mounted in a monostable manner with respect to the longitudinal direction (X).

5. Hand rest device (2) according to any of the preceding claims, wherein a control device (16) for the shift-by-wire gear selection control (15) is designed, with a shift element (10) positioned in the shift position (S2), when the shift element (10) is displaced out (27) along the longitudinal direction (X) to generate an R shift signal (17) for setting a reverse gear and when the shift element (10) is displaced out (25) in opposite direction along the longitudinal direction (X) to generate a D shift signal (17), setting a forward automatic gear selection system.

6. Hand rest device (2) according to any of the preceding claims, wherein the driver-side end (9) of the resting element (6) is held only by the resting element (6) itself and is thus formed to be able to be gripped around by the user.

7. Hand rest device (2) according to any of the preceding claims, wherein the resting element (6) extends over a floor area (11), towards which the bottom side (8) of the resting element (8) faces, wherein in the floor area (11) is provided a screen (13) which has a display surface (14) for displaying a pixel-based display graphic (19).

8. Hand rest device (2) according to claim 7, wherein a control device (18) for the screen (13) is configured to display on the display surface (14) a shift display concerning a gear selection mode set by the shift-by-wire gear selection control (15).

9. Hand rest device (2) according to any of the preceding claims, wherein in the shift position (S2) the shift element (10) is only released for the movement along the longitudinal direction (X) after or while an additional mechanical button or an operating field of a touch-sensitive surface is actuated.

10. Hand rest device (2) according to any of the preceding claims, wherein a start-stop function for starting and stopping a motor of the motor vehicle is integrated into the shift element (10), in that the hand rest device (2) is designed in the stowed position (S1) of the shift element (10) to keep the motor in a switched-off state and in the shift position (S2) of the shift element (10) to operate the motor.

11. Motor vehicle (1) having a shift-by-wire gear selection control (15) and having a hand rest device (2) according to any of the preceding claims, wherein the hand rest device (2) is disposed in a central console (3) between a driver seat (4) and a front passenger seat (5).

12. Motor vehicle (1) according to claim 11, wherein the resting element (6) of the hand rest device (2) is disposed immovably with respect to the central console (3).

## Revendications

1. Dispositif formant appui-main (2) pour un véhicule automobile (1), avec :
- un élément d'appui (6) s'étendant le long d'une direction transversale (Y) d'un côté passager (5) du dispositif formant appui-main (2) à un côté conducteur (4) opposé du dispositif formant appui-main (2), qui présente une surface d'appui (7) dirigée dans une hauteur (Z) pour une main d'utilisateur, et
- un élément de commutation (10) agencé au niveau d'une extrémité côté conducteur (9) de l'élément d'appui (6) et entre la surface d'appui (7) et un côté inférieur opposé (8) de l'élément d'appui (6) pour la commande d'une commande de changement de vitesse shift-by-wire (15), **caractérisé en ce que**
l'élément de commutation (10) est configuré mobile le long de la direction transversale (Y) entre une position de rangement (S1), dans laquelle il est enfoncé en grande partie ou complètement dans l'élément d'appui (6), et une position de commutation (S2), dans laquelle il fait davantage saillie de l'élément d'appui (6) que dans la position de rangement (S1) et dans lequel l'élément de commutation (10) est logé immobile par rapport à une direction longitudinale (X) dans la position de rangement (S1) et mobile de manière unidirectionnelle ou bidirectionnelle dans la position de commutation (S2).

2. Dispositif formant appui-main (2) selon la revendication 1, dans lequel l'élément de commutation (10) présente un verrouillage push-push (20), qui est conçu pour libérer l'élément de commutation (10) de la position de rangement (S1) à la position de commutation (S2) lors d'un enfoncement (21) de l'élément de commutation (10) dans l'élément d'appui (6), et après un nouvel enfoncement de l'élément de commutation (10) le maintenir à nouveau dans la position de verrouillage (S1).

3. Dispositif formant appui-main (2) selon l'une quelconque des revendications précédentes, dans lequel l'élément de commutation (10) présente une zone appui-doigt (24), qui fait saillie de l'élément d'appui (6) dans la direction longitudinale (X) au moins dans la position de commutation (S2).

4. Dispositif formant appui-main (2) selon l'une quelconque des revendications précédentes, dans lequel l'élément de commutation (10) est logé monostable dans la position de commutation (S2) par rapport à la direction longitudinale (X).

5. Dispositif formant appui-main (2) selon l'une quelconque des revendications précédentes, dans lequel un dispositif de commande (16) pour la commande de changement de vitesse shift-by-wire (15) est conçu pour générer avec l'élément de commutation (10) situé dans la position de commutation (S2) lors du déplacement (27) de l'élément de commutation (10) le long de la direction longitudinale (X), un signal de commutation R (17) pour le réglage d'une vitesse arrière et lors du déplacement (25) opposé le long de la direction longitudinale (X) de l'élément de commutation (10), un signal de commutation D (17) pour le réglage d'un dispositif automatique de changement de vitesse avant.

6. Dispositif formant appui-main (2) selon l'une quelconque des revendications précédentes, dans lequel l'extrémité côté conducteur (9) de l'élément d'appui (6) est auto-maintenue uniquement par l'élément d'appui (6) et est ainsi configurée enserrable par l'utilisateur.

7. Dispositif formant appui-main (2) selon l'une quelconque des revendications précédentes, dans lequel l'élément d'appui (6) s'étend au-dessus d'une zone de fond (11), vers laquelle le côté inférieur (8) de l'élément d'appui (8) est tourné, dans lequel un écran (13) est mis à disposition dans la zone de fond (11), qui présente une surface d'affichage (14) pour l'affichage d'un graphique d'affichage à base de pixels (19).

8. Dispositif formant appui-main (2) selon la revendication 7, dans lequel un dispositif de commande (18) pour l'écran (13) est conçu pour afficher sur la surface d'affichage (14) un affichage de commutation concernant un mode de sélection de vitesse réglé lors de la commande de changement de vitesse shift-by-wire (15).

9. Dispositif formant appui-main (2) selon l'une quelconque des revendications précédentes, dans lequel dans la position de commutation (S2), l'élément de commutation (10) n'est libéré pour le déplacement le long de la direction longitudinale (X) qu'après ou pendant qu'une touche mécanique supplémentaire ou un champ de commande d'une surface tactile est actionnée.

10. Dispositif formant appui-main (2) selon l'une quelconque des revendications précédentes, dans lequel une fonction démarrage-arrêt pour le démarrage et l'arrêt d'un moteur du véhicule automobile est intégrée dans l'élément de commutation (10), par le fait que le dispositif formant appui-main (2) est conçu pour maintenir le moteur dans la position de rangement (S1) de l'élément de commutation (10) dans un état éteint et faire fonctionner le moteur dans la position de commutation (S2) de l'élément de commutation (10).

11. Véhicule (1) avec une commande de changement de vitesse shift-by-wire (15) et avec un dispositif formant appui-main (2) selon l'une quelconque des revendications précédentes, dans lequel le dispositif formant appui-main (2) est agencé dans une console médiane (3) entre un siège de conducteur (4) et un siège de passager (5).

12. Véhicule (1) selon la revendication 11, dans lequel l'élément d'appui (6) du dispositif formant appui-main (2) est agencé immobile par rapport à la console médiane (3).
